# EUROPÄISCHE PATENTSCHRIFT

(11) **EP 1 595 764 B1**
(45) Veröffentlichungstag und Bekanntmachung des Hinweises auf die Patenterteilung: **10.09.2008**
(21) Anmeldenummer: 05010243.3
(22) Anmeldetag: 11.05.2005
(51) Int. Cl.: B60T 11/34, B60T 15/50

(54) **Druckminderventil**
Pressure-reducing valve
Vanne de réduction de pression

(30) Priorität: 11.05.2004 DE 102004023255
(43) Veröffentlichungstag der Anmeldung: 16.11.2005
(73) Patentinhaber: KNORR-BREMSE Systeme für Schienenfahrzeuge GmbH, 80809 München (DE)
(72) Erfinder: Gelbmann, Gottfried, 7083 Purbach (AT)
(74) Vertreter: Schönmann, Kurt

(56) Entgegenhaltungen:
- EP-A- 0 492 068
- EP-A- 0 659 621
- DE-A1- 2 922 837
- DE-C1- 3 311 816

## Beschreibung

### Stand der Technik

Die Erfindung geht aus von einem Druckbegrenzungsventil für die Druckluftversorgung einer Fahrzeugbremsanlage, insbesondere für eine Schienenfahrzeugbremsanlage, zur Begrenzung eines zuströmenden Primärdrucks auf einen bestimmten Sekundärdruck, gemäß dem Oberbegriff von Anspruch 1. Ein solches ist aus der DE 29 22 837 A1 bekannt.

Die Abweichung des Sekundärdrucks vom Primärdruck, also die Genauigkeit des Druckbegrenzungsventils, ist abhängig von dessen Bauart. Aus dem Stand der Technik sind im wesentlichen zwei Bauarten von Druckbegrenzungsventilen bekannt, zum einen ein Druckbegrenzungsventil mit hohem Durchfluss und geringer Druckeinstellgenauigkeit und zum andern ein Druckbegrenzungsventil mit geringerem Durchfluss und höherer Druckeinstellgenauigkeit.

Beide Druckbegrenzungsventile haben je zwei Sitzventile, die von einem Kolben gesteuert werden. Dabei sind die Strömungsquerschnitte der Sitzventile eines Druckbegrenzungsventils mit hohem Durchfluss in der Regel größer als die Strömungsquerschnitte der Sitzventile eines Druckbegrenzungsventils mit geringerem Durchfluss. Wegen der größeren Strömungsquerschnitte der Sitzventile eines Druckbegrenzungsventils mit hohem Durchfluss ist die Druckeinstellgenauigkeit geringer als die der Druckbegrenzungsventile mit demgegenüber geringeren Strömungsquerschnitten.

Das bekannte Druckbegrenzungsventil mit hohem Durchfluss und geringer Druckeinstellgenauigkeit beinhaltet eine unter Primärdruck stehende Primärdruckkammer, eine unter Sekundärdruck stehende Sekundärdruckkammer, sowie einen Entlüftungsanschluss, einen einerseits durch den Sekundärdruck und andererseits durch eine in ihrer Vorspannung einstellbare Druckfeder belasteten Arbeitskolben, ein vom Arbeitskolben betätigbares erstes Doppelsitzventil mit einem ersten Sitzventil und einem zweiten Sitzventil, wobei das erste Sitzventil einen gegen einen ersten Ventilsitz anschlagbaren ersten Ventilschließkörper und das zweite Sitzventil einen gegen einen zweiten Ventilsitz anschlagbaren zweiten Ventilschließkörper umfasst, wobei bei vom ersten Ventilsitz abgehobenem ersten Ventilschließkörper die Primärdruckkammer mit der Sekundärkammer und bei vom zweiten Ventilsitz abgehobenem zweiten Ventilschließkörper die Sekundärdruckkammer mit dem Entlüftungsanschluss in Verbindung bringbar ist.

Der vorliegenden Erfindung liegt die Aufgabe zugrunde, ein Druckbegrenzungsventil der oben erwähnten Art derart weiter zu entwickeln, dass es bei möglichst geringem Bauaufwand sowohl einen hohen Durchfluss als auch eine hohe Druckeinstellgenauigkeit aufweist.

Diese Aufgabe wird erfindungsgemäß durch die Merkmale von Anspruch 1 gelöst.

### Vorteile der Erfindung

Die Erfindung basiert auf dem Gedanken, ein Druckbegrenzungsventil zweistufig auszuführen, derart, dass es zum Drucksteigern im Rahmen einer ersten Stufe einen hohen Durchfluss und eine geringere Druckeinstellgenauigkeit und im Rahmen einer hierauf folgenden, zweiten Stufe einen geringeren Durchfluss mit höherer Druckeinstellgenauigkeit aufweist. Dann wird während der ersten Stufe der Sekundärdruck zunächst auf einen Wert nahe einem Solldruckwert erhöht und erst im Laufe der zweiten Stufe genau auf den Solldruckwert eingestellt. Eine schnelle und genaue Drucksteigerung des Sekundärdrucks ist in der Praxis weitaus häufiger gefordert als eine ebensolche Drucksenkung. Hierzu wird das Druckbegrenzungsventil erfindungsgemäß mit zwei Doppelsitzventilen ausgestattet, wobei ein erstes Doppelsitzventil Sitzventile mit größerem Strömungsquerschnitt und folglich auch mit größerem Durchfluss und geringerer Durchflussgenauigkeit und das zweite Doppelsitzventil Sitzventile mit kleinerem Durchfluss und höherer Druckeinstellgenauigkeit aufweist. Dabei werden beide Doppelsitzventile von nur einem einzigen Kolben gesteuert. Weiterhin ist das weitere Doppelsitzventil in einen Ventilschließkörper des einen Doppelsitzventils integriert, so dass die erfindungsgemäße Aufgabe mit wenigen Bauelementen und damit sehr kostengünstig gelöst wird.

Durch die in den Unteransprüchen aufgeführten Maßnahmen sind vorteilhafte Weiterbildungen und Verbesserungen der im Patentanspruch 1 angegebenen Erfindung möglich.

### Zeichnungen

Nachstehend ist ein Ausführungsbeispiel der Erfindung in der Zeichnung dargestellt und in der nachfolgenden Beschreibung näher erläutert. In der Zeichnung zeigt
- Fig.1: eine Querschnittsdarstellung eines Druckbegrenzungsventils gemäß einer bevorzugten Ausführungsform der Erfindung;
- Fig.2: eine vergrößerte Einzeldarstellung von Doppelsitzventilen des Druckbegrenzungsventils von Fig.1.

### Beschreibung des Ausführungsbeispiels

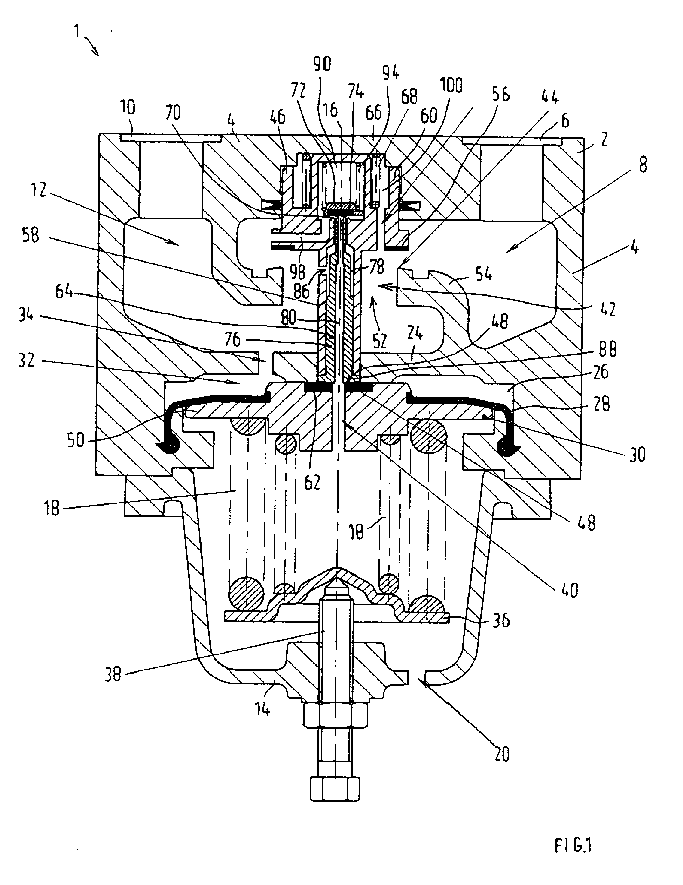

Die in Fig.1 insgesamt mit 1 bezeichnete bevorzugte Ausführungsform eines Druckbegrenzungsventils gemäß der Erfindung dient zur Begrenzung eines zuströmenden Primärdrucks auf einen bestimmten Sekundärdruck in einer Druckluftversorgung einer Schienenfahrzeugbremsanlage.

Das Druckbegrenzungsventil 1 hat ein Gehäuse 2 mit einer oberen Gehäusehälfte 6, in welcher eine unter Primärdruck stehende, mit einem Versorgungsanschluss 6 in Verbindung stehende Primärdruckkammer 8 und eine hierzu benachbart angeordnete, unter Sekundärdruck stehende, mit einem Arbeitsanschluss 10 in Verbindung stehende Sekundärdruckkammer 12 ausgebildet sind. An den Versorgungsanschluss 6 ist eine aus Maßstabsgründen nicht gezeigte Versorgungsleitung und an den Arbeitsanschluss 10 eine ebenfalls nicht dargestellte Arbeitsleitung angeschlossen. Bodenseitig an die obere Gehäusehälfte 4 ist eine untere Gehäusehälfte 14 angeflanscht, in welcher beispielsweise zwei in ihrer Druckvorspannung einstellbare, mit einer Längsachse 16 des Druckbegrenzungsventils 1 koaxiale Druckfedern 18 untergebracht sowie ein mit der Atmosphäre verbundener Entlüftungsanschluss 20 ausgebildet ist.

Die Primärdruckkammer 8 und die Sekundärdruckkammer 12 sind durch eine Querwand 24 von einer bodenseitigen Ausnehmung 26 der oberen Gehäusehälfte 4 getrennt, an deren radial innerem Umfangsrand der radial äußere Rand einer Ringmembrane 28 vorzugsweise formschlüssig eingespannt ist. Die Ringmembrane 28 trägt mit ihrem radial inneren Rand einen Arbeitskolben 30, welcher hierdurch entlang der Längsachse 16 des Druckbegrenzungsventils 1 linear beweglich ist. Zwischen der Ringmembrane 28 und dem Arbeitskolben 30 einerseits und der Querwand 24 andererseits ist eine Druckkammer 32 ausgebildet, welche über einen Verbindungskanal 34 mit der Sekundärdruckkammer 12 in Verbindung steht. Durch die Ringmembrane 28 sind die Sekundärdruckkammer 12 und die Druckkammer 32 druckdicht gegenüber dem Entlüftungsanschluss 20 abgedichtet. Folglich ist eine zur Sekundärdruckkammer 12 weisende Seite des Arbeitskolbens 30 stets mit dem Sekundärdruck belastet. Die Druckfedern 18 sind einerseits an einer in der unteren Gehäusehälfte 14 angeordneten Platte 36 und andererseits an der von der Druckkammer 32 weg weisenden Seite des Arbeitskolbens 30 abgestützt. Die Platte 36 ist durch eine Einstellschraube 38 entlang der Längsachse 16 des Druckbegrenzungsventils 1 einstellbar. Dadurch kann die Vorspannung der Druckfeder 18 und damit der gewünschte Sekundärdruck in der Sekundärdruckkammer 12 eingestellt werden. Der Arbeitskolben 30 weist eine zentrale Durchgangsbohrung 40 auf, welche einen Teil eines zu dem Entlüftungsanschluss 20 in der unteren Gehäusehälfte 14 führenden Entlüftungswegs bildet.

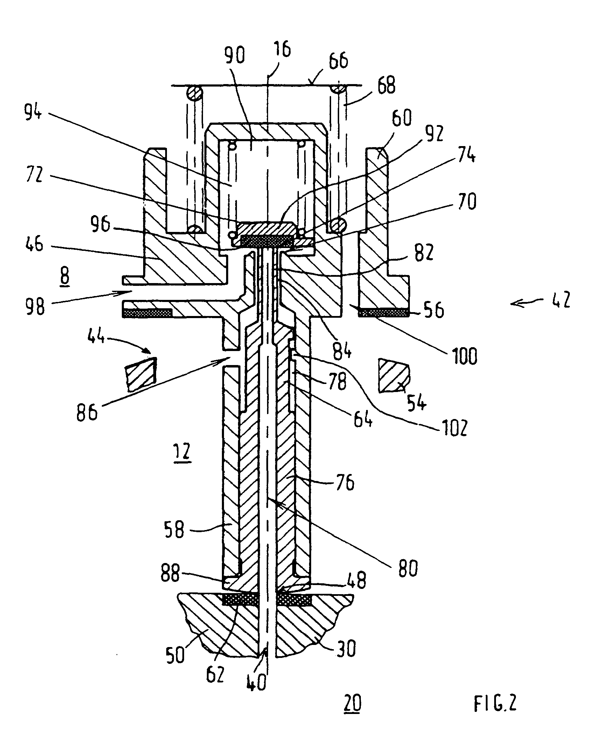

Zwischen der Primärdruckkammer 8 und der Sekundärdruckkammer 12 ist eine Ventilanordnung 42 mit vom Arbeitskolben 30 betätigbarem ersten Doppelsitzventil und zweitem Doppelsitzventil angeordnet, welche am besten anhand von Fig.2 zu sehen sind. Das erste Doppelsitzventil hat ein erstes Sitzventil und ein zweites Sitzventil, wobei das erste Sitzventil einen gegen einen ersten Ventilsitz 44 anschlagbaren ersten Ventilschließkörper 46 und das zweite Sitzventil einen gegen einen zweiten Ventilsitz 48 anschlagbaren zweiten Ventilschließkörper 50 umfasst. Bezüglich der Funktion eines Sitzventils soll im folgenden unter einem Ventilsitz ein Abschnitt verstanden werden, welcher gegenüber dem bewegten Ventilschließkörper ruht.

Der erste Ventilsitz 44 ist am oberen Rand einer sich quer zur Längsachse 16 des Druckbegrenzungsventils 1 erstreckenden Durchgangsöffnung 52 einer die Primärdruckkammer 8 von der Sekundärdruckkammer 12 trennenden Wandung 54 als hervorspringende Kante ausgebildet und liegt einer in einem Tellerabschnitt des ersten Ventilschließkörpers 46 gehaltenen Dichtung 56 gegenüber, mit welcher er zusammenwirkt. Der erste Ventilschließkörper 46 ist einerseits mit einem rohrförmigen Führungsabschnitt 58 in einer zentralen Durchgangsbohrung der Querwand 24 und mit einem demgegenüber pilzförmig vorspringenden, zylindrischen Kopfteil 60 in einer Sacklochbohrung im oberen Gehäuseteil 4 linear beweglich und koaxial mit der Längsachse 16 des Druckbegrenzungsventils 1 geführt. Der zweite Ventilschließkörper 50 wird durch den Arbeitskolben 30 gebildet, welcher am Rand seiner zentralen Durchgangsbohrung 40 eine Dichtung 62 trägt, welche mit einer Stirnfläche des dem Arbeitskolben 30 zugewandten Endes eines Stößels 64 zusammenwirkt, die den zweiten Ventilsitz 48 bildet. Der erste Ventilschließkörper 46 ist durch eine sich an einer Kopfwand 66 der oberen Gehäusehälfte 4 abstützende Druckfeder 68 über den Stößel 64 gegen den Arbeitskolben 30 bzw. gegen den ersten Ventilsitz 44 vorgespannt.

Wie insbesondere aus Fig.1 hervorgeht, ist bei vom ersten Ventilsitz 44 abgehobenem ersten Ventilschließkörper 46 die Primärdruckkammer 8 mit der Sekundärdruckkammer 12 und bei vom zweiten Ventilsitz 48 abgehobenem zweiten Ventilschließkörper 50 die Sekundärdruckkammer 12 über den Verbindungskanal 34, die Druckkammer 32 und die Durchgangsbohrung 40 des Arbeitskolbens 30 mit dem Entlüftungsanschluss 20 in Verbindung bringbar.

In dem ersten Ventilschließkörper 46 des ersten Sitzventils, genauer in dessen Kopfteil 60 ist ein zweites, vom Arbeitskolben 30 über den Stößel 64 betätigbares Doppelsitzventil integriert bzw. mit diesem baulich zusammengefasst, welches ein drittes Sitzventil und ein viertes Sitzventil umfasst, wobei das dritte Sitzventil einen gegen einen dritten Ventilsitz 70 anschlagbaren dritten Ventilschließkörper 72 und das vierte Sitzventil einen gegen einen vierten Ventilsitz 74 anschlagbaren vierten Ventilschließkörper 76 umfasst. Dabei sind die Strömungsquerschnitte des dritten Sitzventils und des vierten Sitzventils des zweiten Doppelsitzventils jeweils kleiner als die Strömungsquerschnitte des ersten und des zweiten Sitzventils des ersten Doppelsitzventils.

Der Führungsabschnitt 58 des ersten Ventilschließkörpers 46 des ersten Sitzventils hat eine gestufte Bohrung 78, in welcher der Stößel 64 linear geführt ist. Der Stößel 64 ist hohlgebohrt und hat eine zentrale Durchgangsbohrung 80. Zwischen einem im Durchmesser reduzierten Kopfteil 82 des Stößels 64 und einer radial inneren Umfangsfläche der Bohrung 78 des ersten Ventilschließkörpers 46 ist ein Ringspalt 84 vorhanden, welcher seitlich in eine mit der Sekundärdruckkammer 12 in Verbindung stehende Querbohrung 86 in der Wandung des Führungsabschnitts 58 mündet. Insbesondere ist der Stößel 64 in der Durchgangsbohrung 78 des ersten Ventilschließkörpers 46 derart beweglich geführt, dass einerseits sein dem dritten Ventilschließkörper 72 zugewandtes Ende vollständig in der Durchgangsbohrung 78 versenkbar ist und dieses Ende andererseits, wenn der Stößel 64 mit einem endseitigen Kragen 88 am Rand des Führungsabschnitts 58 des ersten Ventilschließkörpers 46 angeschlagen ist, über ein vom Arbeitskolben 30 weg weisendes Ende der Durchgangsbohrung 78 des ersten Ventilschließkörpers 46 hinausragen kann, an deren Rand der dritte Ventilsitz 70 ausgebildet ist. Der dritte Ventilschließkörper 72 ist ein in einer Kammer 90 im Kopfteil 60 des ersten Ventilschließkörpers 46 entlang der Längsachse 16 des Druckbegrenzungsventils 1 linear beweglich geführter Ventilteller 92, der durch die Federkraft einer am Boden der Kammer 90 abgestützten Druckfeder 94 mit einer von ihm getragenen Dichtung 96 gegen den dritten Ventilsitz 70 gespannt wird. Die Kammer 90 ist durch einen im Kopfteil 60 des ersten Ventilschließkörpers 46 ausgebildeten Kanal 98 mit der Primärdruckkammer 8 verbunden. Außerdem sorgt ein weiterer Kanal 100 zwischen der Primärdruckkammer 8 und der Sacklochbohrung für einen Druckausgleich an den Stimflächen des Kopfteils 60 des ersten Ventilschließkörpers 46.

Schließlich bildet der Stößel 64 den vierten Ventilschließkörper 76, indem sein zum Ventilteller 92 weisendes Ende ebenfalls gegen die Dichtung 96 des Ventiltellers 92 anschlagbar ist, welcher folglich nicht nur den dritten Ventilschließkörper 72 darstellt, sondern an welchem gleichzeitig auch der vierte Ventilsitz 74 ausgebildet ist. Die mit der zentralen Durchgangsbohrung 40 des Arbeitskolbens 30 fluchtende zentrale Durchgangsbohrung 80 des Stößels 64 bildet einen zu dem Entlüftungsanschluss 20 führenden Entlüftungsweg.

Wie am besten Fig.2 zeigt, ist bei vom dritten Ventilsitz 70 abgehobenem dritten Ventilschließkörper 72 die Primärdruckkammer 8 über den Kanal 98, den Ringspalt 84 und die Querbohrung 86 mit der Sekundärdruckkammer 12 und bei vom vierten Ventilsitz 74 abgehobenem vierten Ventilschließkörper 76 die Sekundärdruckkammer 12 über die Querbohrung 86, den Ringspalt 84 und die Durchgangsbohrung 80 des Stößels 64 mit dem Entlüftungsanschluss 20 verbunden.

Vor diesem Hintergrund ist die Funktionsweise des erfindungsgemäßen Druckbegrenzungsventils 1 wie folgt : Das Druckbegrenzungsventil 1 ist zweistufig aufgebaut, derart, dass es zur Drucksteigerung im Rahmen einer ersten Stufe einen hohen Durchfluss und eine geringere Druckeinstellgenauigkeit und im Rahmen einer hierauf folgenden, zweiten Stufe einen geringeren Durchfluss mit höherer Druckeinstellgenauigkeit aufweist. Dann wird während der ersten Stufe der Sekundärdruck mit Hilfe des ersten Doppelsitzventils zunächst auf einen Wert nahe einem Solldruckwert und erst im Laufe der zweiten Stufe mit Hilfe des zweiten Doppelsitzventils genau auf den Solldruckwert eingestellt. Hierzu hat das erste Doppelsitzventil Sitzventile mit größerem Strömungsquerschnitt und folglich auch mit größerem Durchfluss und geringerer Durchflussgenauigkeit und das zweite Doppelsitzventil Sitzventile mit kleinerem Durchfluss und höherer Druckeinstellgenauigkeit.

Ist beispielsweise der Sekundärdruck in der Sekundärdruckkammer 12 kleiner als der mit Hilfe der Einstellschraube 38 eingestellte Solldruck, beispielsweise aufgrund einer Druckluftentnahme aus der Sekundärdruckkammer 12, so ist die aus dem Sekundärdruck herrührende Druckkraft auf die eine Seite des Arbeitskolbens 30 kleiner als die Druckkraft der Druckfeder 18, so dass der Arbeitskolben 30 als zweiter Ventilschließkörper 50 gegen den zweiten Ventilsitz 48 am Stößel 64 anschlägt und dadurch das zweite Sitzventil schließt. Gleichzeitig schlägt der Arbeitskolben 30 gegen die Querwand 24 und den Stößel 64 an, welcher über seinen Kragen 88 den ersten Ventilschließkörper 46 mitnimmt und ihn vom ersten Ventilsitz 44 abhebt, woraufhin ein relativ großer Strömungsquerschnitt zwischen der Primärdruckkammer 8 und der Sekundärdruckkammer 12 einen relativ großen Durchfluss erzeugt, um den Sekundärdruck ungefähr auf den eingestellten Wert zu steigern. Da das Ende des Stößels 64 vom Arbeitskolben 30 aus der Durchgangsbohrung 78 des ersten Ventilschließkörpers 46 herausgedrängt wird und gegen den Ventilteller 92 spannt, wird dieser vom dritten Ventilsitz 70 abgehoben. Dann ist einerseits das dritte Sitzventil geöffnet, aber das vierte Sitzventil geschlossen, so dass der Strömungsweg der Druckluft zwischen der Sekundärdruckkammer 12 und dem Entlüftungsanschluss 20 gesperrt, jedoch der Strömungsweg zwischen der Primärdruckkammer 8 und der Sekundärdruckkammer 12 über den Kanal 98, den Ringspalt 84 und die Querbohrung 86 geöffnet ist.

Durch Strömen von Druckluft aus der Versorgungsleitung durch die Primärdruckkammer 8 sowie durch das erste und das dritte geöffnete Sitzventil wird wegen der aus dem großen Strömungsquerschnitt herrührenden Ungenauigkeiten im Rahmen einer ersten Stufe der Druck in der Sekundärdruckkammer 12 nur auf einen Wert nahe dem gewünschten Sekundärdruck eingestellt. Wenn dann der Sekundärdruck diesen gegenüber dem Anfangszustand höheren Wert erreicht hat, steigt die vom Druck in der Sekundärdruckkammer 12 herrührende Druckkraft auf den Arbeitskolben 30 an, woraufhin dieser gegen die Wirkung der Druckfeder 18 nach unten gedrängt wird. Aufgrund der Druckkraft der Druckfeder 68 folgt der über den Stößel 64 gegen den Arbeitskolben 30 gedrängte erste Ventilschließkörper 46 dieser Bewegung solange, bis er am ersten Ventilsitz 44 anliegt und damit den Strömungsweg von der Primärdruckkammer 8 zur Sekundärdruckkammer 12 durch das erste Sitzventil verschließt. Demgegenüber sorgt der weiterhin am Arbeitskolben 30 anschlagende und folglich mit seinem Ende über den dritten Ventilsitz 70 hinausragende Stößel 64 dafür, dass der dritte Ventilschließkörper 72 in Form des Ventiltellers 92 noch immer vom dritten Ventilsitz 70 abgehoben ist. Durch den relativ kleinen Strömungsquerschnitt durch das geöffnete dritte Sitzventil kann Druckluft von der Primärdruckkammer 8 über den Kanal 98, den Ringspalt 84 und die Querbohrung 86 in die Sekundärdruckkammer 12 strömen, um den dortigen Druck genau auf den gewünschten Sekundärdruck einzustellen. Hingegen ändert sich an dem weiterhin geschlossenen Zustand des zweiten und vierten Sitzventil nichts.

Nach erfolgter Druckanpassung fährt der Arbeitskolben 30 weiter ein Stück nach unten, wodurch auch das dritte Sitzventil schließt, weil das obere Ende des Stößels 64 in die Durchgangsbohrung 78 des ersten Ventilsitzkörpers 46 eintaucht.

Ist der Druck in der Sekundärdruckkammer 12 größer als der eingestellte Sekundärdruck, beispielsweise aufgrund einer Temperaturerhöhung in der Arbeitsleitung, so wird der Arbeitskolben 30 gegen die Wirkung der Druckfeder 18 weiter nach unten gedrängt. Dabei sind das erste Sitzventil und das dritte Sitzventil geschlossen, weil die entsprechenden Druckfedern 68, 94 den ersten Ventilschließkörper 46 gegen den ersten Ventilsitz 44 und den dritten Ventilschließkörper 72 gegen den dritten Ventilsitz 70 dichtend spannen und weil das obere Ende des Stößels 64 in der Durchgangsbohrung 78 des ersten Ventilschließkörpers 46 vollständig eintaucht. Hingegen öffnet das vierte Sitzventil aufgrund der Kolbenbewegung, indem der am Arbeitskolben 30 anliegende Stößel 64 mit nach unten fährt und somit der vierte Ventilschließkörper 76 vom vierten Ventilsitz 74 abhebt, um einen relativ kleinen Strömungsquerschnitt durch das vierte Sitzventil freizugeben, so dass ein kleiner Druckluftstrom aus der Sekundärdruckkammer 12 über die Querbohrung 86 im ersten Ventilschließkörper 46, den Ringspalt 84, das geöffnete vierte Sitzventil, die Durchgangsbohrung 80 des Stößels 64 und die Durchgangsbohrung 40 des Arbeitskolbens 30 zum Entlüftungsanschluss 20 strömt.

Bei entsprechend großer Druckdifferenz zwischen dem in der Sekundärdruckkammer 12 herrschenden Druck und dem Einstelldruck fährt der Arbeitskolben 30 soweit nach unten, dass er vom zweiten Ventilsitz 48 abhebt. Ein Anschlag 102 sorgt dafür, dass der Stößel 64 dem Arbeitskolben 30 nicht weiter folgen kann, so dass nun auch das zweite Sitzventil öffnen kann, indem sich der Arbeitskolben 30 vom Kragen 88 des Stößels 64 löst. Nun kann ein größerer Druckluftstrom aus der Sekundärdruckkammer 12 über den Verbindungskanal 34, die Druckkammer 32, das geöffnete zweite Sitzventil und die zentrale Durchgangsbohrung 40 des Arbeitskolbens 30 zum Entlüftungsanschluss 20 strömen. Wenn dann der Druck in der Sekundärdruckkammer 12 genügend abgesenkt ist, sinkt die von diesem Druck herrührende Druckkraft auf den Arbeitskolben 30, woraufhin dieser durch die Wirkung der Druckfeder 18 nach oben gedrängt wird und zunächst das zweite Sitzventil und dann das vierte Sitzventil schließt.

### Bezugszeichenliste

- 1: Druckbegrenzungsventil
- 2: Gehäuse
- 4: obere Gehäusehälfte
- 6: Versorgungsanschluss
- 8: Primärdruckkammer
- 10: Arbeitsanschluss
- 12: Sekundärdruckkammer
- 14: untere Gehäusehälfte
- 16: Längsachse
- 18: Druckfeder
- 20: Entlüftungsanschluss
- 24: Querwand
- 26: Ausnehmung
- 28: Ringmembran
- 30: Arbeitskolben
- 32: Druckkammer
- 34: Verbindungskanal
- 36: Platte
- 38: Einstellschraube
- 40: Durchgangsbohrung
- 42: Ventilanordnung
- 44: erster Ventilsitz
- 46: erster Ventilschließkörper
- 48: zweiter Ventilsitz
- 50: zweiter Ventilschließkörper
- 52: Durchgangsöffnung
- 54: Wandung
- 56: Dichtung
- 58: Führungsabschnitt
- 60: Kopfteil
- 62: Dichtung
- 64: Stößel
- 66: Kopfwand
- 68: Druckfeder
- 70: dritter Ventilsitz
- 72: dritter Ventilschließkörper
- 74: vierter Ventilsitz
- 76: vierter Ventilschließkörper
- 78: Bohrung
- 80: Durchgangsbohrung
- 82: Kopfteil
- 84: Ringspalt
- 86: Querbohrung
- 88: Kragen
- 90: Kammer
- 92: Ventilteller
- 94: Druckfeder
- 96: Dichtung
- 98: Kanal
- 100: Kanal
- 102: Anschlag

## Patentansprüche

1. Druckbegrenzungsventil (1) für die Druckluftversorgung einer Fahrzeugbremsanlage, insbesondere für eine Schienenfahrzeugbremsanlage, zur Begrenzung eines zuströmenden Primärdrucks auf einen bestimmten Sekundärdruck, beinhaltend
a) eine unter Primärdruck stehende Primärdruckkammer (8), eine unter Sekundärdruck stehende Sekundärdruckkammer (12), sowie einen Entlüftungsanschluss (20),
b) einen einerseits durch den Sekundärdruck und andererseits durch eine in ihrer Vorspannung einstellbare Druckfeder (18) belasteten Arbeitskolben (30),
c) ein vom Arbeitskolben (30) betätigbares erstes Doppelsitzventil mit einem ersten Sitzventil und einem zweiten Sitzventil, wobei das erste Sitzventil einen gegen einen ersten Ventilsitz (44) anschlagbaren ersten Ventilschließkörper (46) und das zweite Sitzventil einen gegen einen zweiten Ventilsitz (48) anschlagbaren zweiten Ventilschließkörper (50) umfasst, wobei
d) bei vom ersten Ventilsitz (44) abgehobenem ersten Ventilschließkörper (46) die Primärdruckkammer (8) mit der Sekundärkammer (12) und bei vom zweiten Ventilsitz (48) abgehobenem zweiten Ventilschließkörper (50) die Sekundärdruckkammer (12) mit dem Entlüftungsanschluss (20) in Verbindung bringbar ist,
**dadurch gekennzeichnet, dass**
e) ein vom Arbeitskolben (30) betätigbares zweites Doppelsitzventil vorgesehen ist, welches in dem ersten Ventilschließkörper (46) des ersten Sitzventils integriert ist und ein drittes Sitzventil und ein viertes Sitzventil umfasst, wobei
f) das dritte Sitzventil einen gegen einen dritten Ventilsitz (70) anschlagbaren dritten Ventilschließkörper (72) und das vierte Sitzventil einen gegen einen vierten Ventilsitz (74) anschlagbaren vierten Ventilschließkörper (76) umfasst, und wobei
g) bei vom dritten Ventilsitz (70) abgehobenem dritten Ventilschließkörper (72) die Primärdruckkammer (8) mit der Sekundärdruckkammer (12) und bei vom vierten Ventilsitz (74) abgehobenem vierten Ventilschließkörper (76) die Sekundärdruckkammer (12) mit dem Entlüftungsanschluss (20) in Verbindung bringbar ist, und wobei
h) die Strömungsquerschnitte des dritten Sitzventils und des vierten Sitzventils jeweils kleiner sind als die Strömungsquerschnitte des ersten Sitzventils und des zweiten Sitzventils.

2. Druckbegrenzungsventil nach Anspruch 1, **dadurch gekennzeichnet, dass** der vierte Ventilsitz (74) am dritten Ventilschließkörper (72) ausgebildet ist.

3. Druckbegrenzungsventil nach Anspruch 1 oder 2, **dadurch gekennzeichnet, dass** es derart ausgebildet ist, dass
3.1 zum Einstellen eines höheren Sekundärdrucks in einer ersten Stufe
a) der erste Ventilschließkörper (46) vom ersten Ventilsitz (44) abgehoben ist, und
b) der zweite Ventilschließkörper (50) am zweiten Ventilsitz (48) anschlägt, und
c) der dritte Ventilschließkörper (72) vom dritten Ventilsitz (70) abgehoben ist, und
d) der vierte Ventilschließkörper (76) am vierten Ventilsitz (74) anschlägt, und
3.2 zum Einstellen eines höheren Sekundärdrucks in einer zweiten Stufe
e) der erste Ventilschließkörper (46) am ersten Ventilsitz (44) anschlägt, und
f) der zweite Ventilschließkörper (50) am zweiten Ventilsitz (48) anschlägt, und
g) der dritte Ventilschließkörper (72) vom dritten Ventilsitz (70) abgehoben ist, und
h) der vierte Ventilschließkörper (76) am vierten Ventilsitz (74) anschlägt.

4. Druckbegrenzungsventil nach Anspruch 1, **dadurch gekennzeichnet, dass** es derart ausgebildet ist, dass
4.1 zum Einstellen eines niedrigeren Sekundärdrucks in einer ersten Stufe
a) der erste Ventilschließkörper (46) am ersten Ventilsitz (44) anschlägt, und
b) der zweite Ventilschließkörper (50) am zweiten Ventilsitz (48) anschlägt, und
c) der dritte Ventilschließkörper (72) am dritten Ventilsitz (70) anschlägt, und
d) der vierte Ventilschließkörper (76) vom vierten Ventilsitz (74) abgehoben ist, und
4.2 zum Einstellen eines niedrigeren Sekundärdrucks in einer zweiten Stufe
e) der erste Ventilschließkörper (46) am ersten Ventilsitz (44) anschlägt, und
f) der zweite Ventilschließkörper (50) vom zweiten Ventilsitz (48) abgehoben ist, und
g) der dritte Ventilschließkörper (72) am dritten Ventilsitz (70) anschlägt, und
h) der vierte Ventilschließkörper (76) vom vierten Ventilsitz (74) abgehoben ist.

5. Druckbegrenzungsventil nach wenigstens einem der vorhergehenden Ansprüche, **dadurch gekennzeichnet, dass** der erste Ventilschließkörper (46) des ersten Sitzventils einen Stößel (64) führt, welcher den vierten Ventilschließkörper (76) bildet und an welchem an dem dem Arbeitskolben (30) zugewandten Ende der zweite Ventilsitz (48) ausgebildet ist.

6. Druckbegrenzungsventil nach Anspruch 5, **dadurch gekennzeichnet, dass** der Stößel (64) durch den Arbeitskolben (30) betätigbar ist.

7. Druckbegrenzungsventil nach Anspruch 6, **dadurch gekennzeichnet, dass** der zweite Ventilschließkörper (50) durch den Arbeitskolben (30) gebildet wird.

8. Druckbegrenzungsventil nach Anspruch 7, **dadurch gekennzeichnet, dass** an dem dem Arbeitskolben (30) zugewandten Ende des Stößels (64) der zweite Ventilsitz (48) ausgebildet ist.

9. Druckbegrenzungsventil nach Anspruch 8, **dadurch gekennzeichnet, dass** der Stößel (64) in einer Durchgangsbohrung (78) des ersten Ventilschließkörpers (46) derart beweglich geführt ist, dass einerseits sein dem dritten Ventilschließkörper (72) zugewandtes Ende vollständig in der Durchgangsbohrung (78) versenkbar ist und andererseits, wenn der Stößel (64) an einem Anschlag im ersten Ventilschließkörper (46) angeschlagen ist, dieses Ende über einen Rand des ersten Ventilschließkörpers (46) hinausragen kann, um den dritten Ventilschließkörper (72) vom dritten Ventilsitz (70) abzuheben.

10. Druckbegrenzungsventil nach Anspruch 9, **dadurch gekennzeichnet, dass** an dem Rand des ersten Ventilschließkörpers (46) der dritte Ventilsitz (70) ausgebildet und der dritte Ventilschließkörper (72) gegen diesen Rand federvorgespannt ist.

11. Druckbegrenzungsventil nach Anspruch 10, **dadurch gekennzeichnet, dass** der Stößel (64) eine zentrale Durchgangsbohrung (80) aufweist, welche zumindest einen Teil eines zu dem Entlüftungsanschluss (20) führenden Entlüftungswegs bildet.

12. Druckbegrenzungsventil nach Anspruch 11, **dadurch gekennzeichnet, dass** der erste Ventilsitz (44) an einem Gehäuse (2) des Druckbegrenzungsventils (1) ausgebildet ist.

13. Druckbegrenzungsventil nach Anspruch 12, **dadurch gekennzeichnet, dass** der dritte Ventilschließkörper (72) durch einen gegen den dritten Ventilsitz (70) federvorgespannten Ventilteller (92) gebildet wird.

14. Druckbegrenzungsventil nach Anspruch 13, **dadurch gekennzeichnet, dass** der Arbeitskolben (30) eine zentrale Durchgangsbohrung (40) aufweist, welche wenigstens einen Teil eines zu dem Entlüftungsanschluss(20) führenden Entlüftungswegs bildet.

## Claims

1. Pressure-limiting valve (1) for the compressed-air supply of a vehicle brake system, in particular a brake system in a rail vehicle, for limiting an in-flowing primary pressure to a defined secondary pressure, comprising
(a) a primary pressure chamber (8) pressurised with a primary pressure, a secondary pressure chamber (12) pressurised with a secondary pressure, as well as an air bleeding connector (10),
(b) a working piston (30) loaded, on the one hand, by said secondary pressure and, on the other hand, by a compression spring (18) whose bias may be adjusted,
(c) a first double-seated valve adapted to be operated by said working piston (30), which includes a first seat valve and a second seat valve, wherein said first seat valve comprises a first valve closing body (46) adapted to be engaged against a first valve seat (44) whilst said second seat valve comprises a second valve closing body (48) adapted to be engaged against a second valve seat (48), wherein
(d) when said first valve closing body (46) is lifted off said first valve seat (44), said primary pressure chamber (8) may be communicated with said secondary pressure chamber (12) and, when said second valve closing body (50) is lifted off said second valve seat (48), said secondary pressure chamber (12) may be communicated with said air bleeding connector (20),
**characterised in that**
(e) a second double-seated valve is provided which is adapted to be operated by said working piston (30) and which is integrated into said first valve closing body (46) of said first seat valve and encompasses a third seat valve and a fourth seat valve, with
(f) said third seat valve encompassing a third valve closing body (72) adapted to be engaged against a third valve seat (70) and with said fourth seat valve encompassing a fourth valve closing body (76) adapted to be engaged against a fourth valve seat (74), and wherein
(g) when said third valve closing body (72) is lifted off said third valve seat (70), said primary pressure chamber (8) may be communicated with said secondary pressure chamber (12) and, when said fourth valve closing body (76) is lifted off said fourth valve seat (74), said secondary pressure chamber (12) may be communicated with said air bleeding connector (20), and wherein
(h) the flow cross-sections of said third seat valve and of said fourth seat valve are each smaller than the flow cross-sections of said first seat valve and of said second seat valve.

2. Pressure-limiting valve according to Claim 1, **characterised in that** said fourth valve seat (74) is formed on said third valve closing body (72).

3. Pressure-limiting valve according to Claim 1 or 2, **characterised in that** it is configured in such a form that
3.1 for setting of a higher secondary pressure level in a first stage
(a) said first valve closing body (46) is lifted off said first valve seat (44), and
(b) said second valve closing body (50) hits against said second valve seat (48), and
(c) said third valve closing body (72) is lifted off said third valve seat (70), and
(d) said fourth valve closing body (75) hits against said fourth valve seat (74), and
3.2 for setting of a higher secondary pressure level in a second stage
(e) said first valve closing body (46) hits against said first valve seat (44), and
(f) said second valve closing body (50) hits against said second valve seat (48), and
(g) said third valve closing body (72) is lifted off said third valve seat (70), and
(h) said fourth valve closing body (76) hits against said fourth valve seat (74).

4. Pressure-limiting valve according to Claim 1, **characterised in that** it is configured in such a form that
4.1 for setting of a lower secondary pressure level in a first stage
(a) said first valve closing body (46) hits against said first valve seat (44), and
(b) said second valve closing body (50) hits against said second valve seat (48), and
(c) said third valve closing body (72) hits against said third valve seat (70), and
(d) said fourth valve closing body (75) is lifted off said fourth valve seat (74), and
4.2 for setting of a lower secondary pressure level in a second stage
(e) said first valve closing body (46) hits against said first valve seat (44), and
(f) said second valve closing body (50) is lifted off said second valve seat (48), and
(g) said third valve closing body (72) hits against said third valve seat (70), and
(h) said fourth valve closing body (76) is lifted off said fourth valve seat (74).

5. Pressure-limiting valve according to at least one of the preceding Claims, **characterised in that** said first valve closing body (46) of said first seat valve guides a tappet (64) that constitutes said fourth valve closing body (76) and on which said second valve seat (48) is formed on the end facing said working piston (30).

6. Pressure-limiting valve according to Claim 5, **characterised in that** said tappet (64) is adapted to be operated by said working piston (30).

7. Pressure-limiting valve according to Claim 6, **characterised in that** said second valve closing body (50) is formed by said working piston (30).

8. Pressure-limiting valve according to Claim 7, **characterised in that** said second valve seat (48) is formed on that end of said tappet (64), which faces said working piston (30).

9. Pressure-limiting valve according to Claim 8, **characterised in that** said tappet (64) is guided in a through-hole (78) of said first valve closing body for movement in such a way that, on the one hand, its end facing said third valve closing body (72) is adapted to be completely sunk into said through-hole (78) and, on the other hand, when said tappet (64) hits against a stop element in said first valve closing body (46), this end may project beyond an edge of said first valve closing body (46) in order to lift said third valve closing body (72) off said third valve seat (70).

10. Pressure-limiting valve according to Claim 9, **characterised in that** said third valve seat (70) is formed on the edge of said first valve closing body (46) and that said third valve closing body (72) is biased by means of a spring against this edge.

11. Pressure-limiting valve according to Claim 10, **characterised in that** said tappet (64) comprises a central through-hole (80) which constitutes at least one part of an air bleeding path leading to said air bleeding connector (20).

12. Pressure-limiting valve according to Claim 11, **characterised in that** said first valve seat (44) is formed on a housing (2) of said pressure-limiting valve (1).

13. Pressure-limiting valve according to Claim 12, **characterised in that** said third valve closing body (72) is constituted by a valve disc (92) biased by means of a spring against said third valve seat (70).

14. Pressure-limiting valve according to Claim 13, **characterised in that** said working piston (30) comprises a central through-hole (40) that constitutes at least one part of an air bleeding path leading to said air bleeding connector (20).

## Revendications

1. Soupape de limitation de pression (1) pour l'alimentation d'un système de freinage d'un véhicule en air comprimé, en particulier d'un système de freinage dans un véhicule sur rails, afin de limiter une pression primaire entrant à un niveau de pression secondaire défini, comprenant
(a) une chambre de pression primaire (8) soumise à une pression primaire, une chambre de pression secondaire (12) soumise à une pression secondaire, ainsi qu'un raccord de purge de l'air (10),
(b) un piston de travail (30) chargé, d'un côté, par ladite pression secondaire et, d'autre côté, par un ressort de pression (18) dont la précontrainte est ajustable,
(c) une première soupape à double siège apte à être commandé par ledit piston de travail (30), qui contient une première soupape à siège et une deuxième soupape à siège, dans laquelle ladite première soupape à siège comprend un premier corps de fermeture de la soupape (46) apte à être porté contre une première siège de soupape (44), pendant que ladite deuxième soupape à siège comprend un deuxième corps de fermeture de la soupape (48) apte à être porté contre une deuxième siège de soupape (48), dans laquelle
(d) quand ledit premier corps de fermeture de la soupape (46) est soulevé de ladite première siège de soupape (44), ladite chambre de pression primaire (8) peut être mise en communication avec ladite chambre de pression secondaire (12) et, quand ledit deuxième corps de fermeture de la soupape (50) est soulevé de ladite deuxième siège de soupape (48), ladite chambre de pression secondaire (12) peut être mise en communication avec ledit raccord de purge de l'air (20),
**caractérisée en ce**
(e) **qu'**une deuxième soupape à double siège est disposée, qui est apte à être commandé par ledit piston de travail (30) et qui est intégrée dans ledit premier corps de fermeture de la soupape (46) de ladite première soupape à siège et renferme une troisième soupape à siège et une quatrième soupape à siège,
(f) à ladite troisième soupape à siège renfermant un troisième corps de fermeture de la soupape (72) apte à être porté contre une troisième siège de soupape (70) et à ladite quatrième soupape à siège renfermant un quatrième corps de fermeture de la soupape (76) apte à être porté contre une quatrième siège de soupape (74), et dans laquelle
(g) quand ladite troisième corps de fermeture de la soupape (72) est soulevé de ladite troisième siège de soupape (70), ladite chambre de pression primaire (8) peut être mise en communication avec ladite chambre de pression secondaire (12) et, quand ladite quatrième corps de fermeture de la soupape (76) est soulevé de ladite quatrième siège de soupape (74), ladite chambre de pression secondaire (12) peut être mise en communication avec ledit raccord de purge de l'air (20), et dans laquelle
(h) chacune des sections mouillées de ladite troisième soupape à siège et de ladite quatrième soupape à siège et plus petite que les sections mouillées de ladite première soupape à siège et de ladite deuxième soupape à siège.

2. Soupape de limitation de pression selon la revendication 1, **caractérisée en ce que** ladite quatrième siège de soupape (74) est formée audit troisième corps de fermeture de la soupape (72).

3. Soupape de limitation de pression selon la revendication 1 ou 2, **caractérisée en ce qu'**elle est configurée sous une telle forme, que
3.1 pour le réglage d'un niveau de pression secondaire plus haut dans une première phase
(a) ledit premier corps de fermeture de la soupape (46) est soulevé de ladite première siège de soupape (44), et
(b) ledit deuxième corps de fermeture de la soupape (50) s'arrête contre ladite deuxième siège de soupape (48), et
(c) ledit troisième corps de fermeture de la soupape (72) est soulevé de ladite troisième siège de soupape (70), et
(d) ledit quatrième corps de fermeture de la soupape (75) s'arrête contre ladite quatrième siège de soupape (74), et
3.2 pour le réglage d'un niveau de pression secondaire plus haut dans une deuxième phase
(e) ledit premier corps de fermeture de la soupape (46) s'arrête contre ladite première siège de soupape (44), et
(f) ledit deuxième corps de fermeture de la soupape (50) s'arrête contre ladite deuxième siège de soupape (48), et
(g) ledit troisième corps de fermeture de la soupape (72) est soulevé de ladite troisième siège de soupape (70), et
(h) ledit quatrième corps de fermeture de la soupape (76) s'arrête contre ladite quatrième siège de soupape (74).

4. Soupape de limitation de pression selon la revendication 1, **caractérisée en ce qu'**elle est configurée sous une telle forme, que
4.1 pour le réglage d'un niveau de pression secondaire plus bas dans une première phase
(a) ledit premier corps de fermeture de la soupape (46) s'arrête contre ladite première siège de soupape (44), et
(b) ledit deuxième corps de fermeture de la soupape (50) s'arrête contre ladite deuxième siège de soupape (48), et
(c) ledit troisième corps de fermeture de la soupape (72) s'arrête contre ladite troisième siège de soupape (70), et
(d) ledit quatrième corps de fermeture de la soupape (75) est soulevé de ladite quatrième siège de soupape (74), et
4.2 pour le réglage d'un niveau de pression secondaire plus bas dans une deuxième phase
(e) ledit premier corps de fermeture de la soupape (46) s'arrête contre ladite première siège de soupape (44), et
(f) ledit deuxième corps de fermeture de la soupape (50) est soulevé de ladite deuxième siège de soupape (48), et
(g) ledit troisième corps de fermeture de la soupape (72) s'arrête contre ladite troisième siège de soupape (70), et
(h) ledit quatrième corps de fermeture de la soupape (76) est soulevé de ladite quatrième siège de soupape (74).

5. Soupape de limitation de pression selon au moins une quelconque des revendications précédentes, **caractérisée en ce que** ledit premier corps de fermeture de la soupape (46) de ladite première soupape à siège guide un poussoir de soupape (64), qui constitue ledit quatrième corps de fermeture de la soupape (76) et auquel ladite deuxième siège de soupape (48) est formée à l'extrémité en face dudit piston de travail (30).

6. Soupape de limitation de pression selon la revendication 5, **caractérisée en ce que** ledit poussoir de soupape (64) est apte à être commandé par ledit piston de travail (30).

7. Soupape de limitation de pression selon la revendication 6, **caractérisée en ce que** ledit deuxième corps de fermeture de la soupape (50) est constitué par ledit piston de travail (30).

8. Soupape de limitation de pression selon la revendication 7, **caractérisée en ce que** ladite deuxième siège de soupape (48) est formée à cette extrémité dudit poussoir de soupape (64), qui se trouve en face dudit piston de travail (30).

9. Soupape de limitation de pression selon la revendication 8, **caractérisée en ce que** ledit poussoir de soupape (64) est guidé dans un trou de passage (78) dudit premier corps de fermeture de la soupape pour un mouvement d'une telle façon, que, d'un côté, son extrémité en face dudit troisième corps de fermeture de la soupape (72) est apte à être complètement noyé dans ledit trou de passage (78) et, d'autre côté, quand ledit poussoir de soupape (64) s'arrête contre une butée dans ledit premier corps de fermeture de la soupape (46), cette extrémité puisse faire saillie d'un bord dudit premier corps de fermeture de la soupape (46) afin de soulever ledit troisième corps de fermeture de la soupape (72) de ladite troisième siège de soupape (70).

10. Soupape de limitation de pression selon la revendication 9, **caractérisée en ce que** ladite troisième siège de soupape (70) est formé au bord dudit premier corps de fermeture de la soupape (46) et que ledit troisième corps de fermeture de la soupape (72) est mis en précontrainte au moyen d'un ressort contre ce bord.

11. Soupape de limitation de pression selon la revendication 10, **caractérisée en ce que** ledit poussoir de soupape (64) comprend un trou de passage (80) central, qui constitue au moins une partie d'une course de purge de l'air, qui mène audit raccord de purge de l'air (20).

12. Soupape de limitation de pression selon la revendication 11, **caractérisée en ce que** ladite première siège de soupape (44) est formée à un carter (2) de ladite soupape de limitation de pression (1).

13. Soupape de limitation de pression selon la revendication 12, **caractérisée en ce que** ledit troisième corps de fermeture de la soupape (72) est constitué par une tête de soupape (92) mise en précontrainte au moyen d'un ressort contre ladite troisième siège de soupape (70).

14. Soupape de limitation de pression selon la revendication 13, **caractérisée en ce que** ledit piston de travail (30) comprend un trou de passage (40) central, qui constitue au moins une partie d'une course de purge de l'air, qui mène audit raccord de purge de l'air (20).
